(19) Europäisches Patentamt
European Patent Office
Office européen des brevets

(11) **EP 1 886 099 B1**

(12) **EUROPÄISCHE PATENTSCHRIFT**

(45) Veröffentlichungstag und Bekanntmachung des Hinweises auf die Patenterteilung:
**02.07.2014 Patentblatt 2014/27**

(21) Anmeldenummer: **06755046.7**

(22) Anmeldetag: **05.05.2006**

(51) Int Cl.:
***G01F 1/84*** *(2006.01)*

(86) Internationale Anmeldenummer:
**PCT/EP2006/062093**

(87) Internationale Veröffentlichungsnummer:
**WO 2006/128772 (07.12.2006 Gazette 2006/49)**

(54) **CORIOLIS MASSENDURCHFLUSSMESSER UND VERFAHREN ZUR KOMPENSATION VON ÜBERTRAGUNGSFEHLERN VON DESSEN EINGANGSSCHALTUNG**

CORIOLIS MASS FLOWMETER AND METHOD FOR COMPENSATING FOR TRANSMISSION ERRORS IN ITS INPUT CIRCUIT

DEBITMETRE MASSIQUE DE CORIOLIS ET PROCEDE POUR COMPENSER DES ERREURS DE TRANSMISSION DE SON CIRCUIT D'ENTREE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.05.2005 DE 102005025354**

(43) Veröffentlichungstag der Anmeldung:
**13.02.2008 Patentblatt 2008/07**

(73) Patentinhaber: **Endress+Hauser Flowtec AG
4153 Reinach (CH)**

(72) Erfinder:
• **LALLA, Robert
79541 Lörrach (DE)**
• **ROOST, Matthias
CH-4144 Arlesheim (CH)**

(74) Vertreter: **Andres, Angelika Maria
Endress+Hauser(DE)Holding,
Patserve,
Colmarer Strasse 6
79576 Weil am Rhein (DE)**

(56) Entgegenhaltungen:
**WO-A-2006/001805**

• **PATENT ABSTRACTS OF JAPAN Bd. 007, Nr. 270 (P-240), 2. Dezember 1983 (1983-12-02) & JP 58 151518 A (YOKOGAWA DENKI SEISAKUSHO KK), 8. September 1983 (1983-09-08)**

EP 1 886 099 B1

**EP 1 886 099 B1**

**Beschreibung**

Die Erfindung betrifft einen Coriolis Massendurchflussmesser und ein Verfahren zur Kompensation von Übertragungsfehlern von dessen Eingangsschaltung.

Coriolis Massendurchflussmesser werden in der industriellen Messtechnik zur Messung eines Massendurchflusses eines Mediums in einem Rohrleitungsabschnitt eingesetzt.

Coriolis Massendurchflussmesser weisen ein Messrohr auf, das sich im Messbetrieb in dem Rohrleitungsabschnitt befindet und von dem Medium durchströmt wird. Das Messrohr wird in Schwingungen versetzt. Die Schwingung des Messrohres wird durch das hindurchströmende Medium beeinflusst. Messrohr und Medium bilden zusammen ein schwingungsfähiges System, das in der Regel auf seiner Resonanzfrequenz angeregt wird. Die resultierende Schwingungsbewegung des Messrohrs wird üblicherweise durch zwei am Messrohr angeordnete Schwingungssensoren erfasst, deren Sensorsignale mittels einer Eingangsschaltung aufgenommen und aufbereitet werden. Anhand der aufbereiteten Sensorsignale wird der Massendurchfluss bestimmt. Die Sensorsignale weisen eine Frequenz auf, die gleich einer Frequenz der Schwingung des Messrohres ist. Sie sind jedoch gegeneinander phasenverschoben. Die Phasenverschiebung ist ein Maß für den Massedurchfluss des Mediums im Messrohr.

In der EP-A 1 298 421 ist ein solcher Coriolis Massendurchflussmessaufnehmer beschrieben, bei dem die Sensorsignale jeweils einem zugeordneten Eingangszweig der Eingangsschaltung zugeführt werden, in dem sie verstärkt und anschließend digitalisiert werden. Die verstärkten, digitalisierten Sensorsignale werden einem digitalen Signalprozessor zugeführt, der anhand dieser Signale den Massendurchfluss bestimmt. Die Bestimmung des Massendurchflusses erfolgt nach bekannten Verfahren, bei denen z.B. eine Phasenverschiebung oder eine Zeitverschiebung zwischen den beiden Sensorsignalen berechnet und daraus der Massendurchfluss bestimmt wird.

Dabei erzeugen Verstärker, Analog-Digital-Wandler und gegebenenfalls im Eingangszweig vorhandene passive Filter eine in der Regel ungenügend spezifizierte und driftende Phasendrehung bzw. -verschiebung. Ein hieraus resultierender Nullpunkt-Fehler ist insbesondere dann kritisch, wenn die Bestimmung des Massendurchflusses anhand einer parallelen Auswertung der einzelnen Sensorsignale erfolgt. Während sich die genannten Nullpunkt-Fehler bei einer Bestimmung des Massedurchflusses anhand von Summen- und/oder Differenzsignalen der Sensorsignale zumindest teilweise kompensieren können, wirkt sich bei einer parallelen Auswertung jede Asymmetrie der Eingangszweige der Eingangsschaltung in einem resultierenden Nullpunktfehler aus.

Hieraus resultiert eine Messungenauigkeit für die Bestimmung des Massendurchflusses, die in der Regel nur durch aufwendige Kalibrationen reduziert werden kann.

JP 58 151518 A offenbart einen Coriolis-Massendurchflussmesser mit einem Messrohr, das im Messbetrieb zu Schwingungen angeregt wird und von einer Flüssigkeit durchströmt wird, deren Massendurchfluss zu messen ist, und mit einem ersten und einem zweiten Sensor zur Erfassung einer vom Massendurchfluss abhängigen Schwingung des Messrohrs und zur Erzeugung eines ersten und eines zweiten Sensorsignals.

In JP 58 151518 A wird der Coriolis-Massendurchflussmesser mit einem Schalter zwischen einem Messbetrieb und einem Kalibrierungsbetrieb geschaltet. Im Messbetrieb wird jedes Sensormesssignal in einem jeweiligen Eingangszweig aufbereitet. Im Kalibrierungsbetrieb wird dasselbe Signal auf beiden Eingangszweigen aufbereitet und aus den Ausgangssignalen wird eine Phasen- oder Laufzeitdifferenz ermittelt. Die ermittelte Differenz wird zur Korrektur der gemessenen Phasen- oder Laufzeitdifferenz zwischen den Messsignalen im Messbetrieb benutzt. So wird eine driftende durch die Eingangszweige verursachte Phasen- oder Laufzeitverschiebung korrigiert.

WO 2006/001805 A bildet einen Stand der Technik gemäß Artikel 54(3) EPÜ.

WO 2006/001805 offenbart auch einen Coriolis-Massendurchflussmesser mit einem Messrohr, einem ersten und einem zweiten Sensor zur Erfassung einer vom Massendurchfluss abhängigen Schwingung des Messrohrs und zur Erzeugung eines ersten und eines zweiten Sensorsignals. Jedes Sensorsignal wird durch einen jeweiligen Eingangszweig zu der Messschaltung übermittelt.

In WO 2006/001805 A werden ein oder mehrere Referenzsignale in den zwei durch Kabel gebildeten Eingangszweigen eingespeist. Die durch die Eingangszweige übermittelten Referenzsignale werden durch die Messschaltung herausgefiltert und zur Bildung einer Referenzphasendifferenz benutzt. Die gleichzeitig gemessene Phasendifferenz zwischen den beiden Sensorsignalen wird durch diese ermittelte Referenzphasendifferenz kompensiert.

In WO 2006/001805 A sind die durch Kabel gebildeten Eingangszweige nicht zur Aufbereitung der Sensorsignale und der Referenzsignale gebildet.

Es ist eine Aufgabe der Erfindung einen Coriolis Massendurchflussmesser anzugeben, der eine hohe Messgenauigkeit ermöglicht.

Eine weitere Aufgabe besteht darin ein Verfahren zur Kompensation von Übertragungsfehlern einer Eingangsschaltung eines Coriolis Massendurchflussmesser anzugeben, durch das eine hohe Messgenauigkeit erzielbar ist.

Hierzu besteht die Erfindung in einem Coriolis Massendurchflussmesser gemäß dem Anspruch 1 mit

- einem Messrohr, das im Messbetrieb zu Schwingungen angeregt wird und von einem Medium durchströmt wird, dessen Massendurchfluss zu messen ist,
- einem ersten und einem zweiten Sensor zur Erfassung einer vom Massendurchfluss abhängigen Schwingung des Messrohrs und zur Erzeugung eines ersten und eines zweiten Sensorsignals,
- mindestens einem Referenzsignal-Generator, der dem ersten und dem zweiten Sensorsignal ein und dasselbe Referenzsignal überlagert,
- einem ersten Eingangszweig, zur Aufbereitung eines aus dem ersten Sensorsignal und dem überlagerten Referenzsignal gebildeten ersten Hilfssignals,
- einem zweiten Eingangszweig, zur Aufbereitung eines aus dem zweiten Sensorsignal und dem überlagerten Referenzsignal gebildeten zweiten Hilfssignals,
- Mitteln, die dazu dienen aus dem aufbereiteten ersten Hilfssignal ein aufbereitetes erstes Sensorsignal und ein aufbereitetes erstes Referenzsignal heraus zu filtern,
- Mitteln, die dazu dienen aus dem aufbereiteten zweiten Hilfssignal ein aufbereitetes zweites Sensorsignal und ein aufbereitetes zweites Referenzsignal heraus zu filtern,
- Mitteln zur Bestimmung einer Phasen- oder Laufzeitdifferenz zwischen dem ersten aufbereiteten Referenzsignal und dem zweiten aufbereiteten Referenzsignal,
- Mitteln zur Korrektur der Phasen- oder Laufzeitdifferenz zwischen dem ersten und dem zweiten aufbereiteten Sensorsignal anhand der Phasen- oder Laufzeitdifferenz zwischen dem ersten und dem zweiten aufbereiteten Referenzsignal, und
- Mitteln zur Bestimmung des Massendurchflusses anhand der korrigierten

aufbereiteten Sensorsignale.

Gemäß einer Ausgestaltung umfassen die Mittel die dazu dienen dazu aus dem aufbereiteten ersten Hilfssignal ein aufbereitetes erstes Sensorsignal und ein aufbereitetes erstes Referenzsignal heraus zu filtern, und die Mittel, die dazu dienen aus dem aufbereiteten zweiten Hilfssignal ein aufbereitetes zweites Sensorsignal und ein aufbereitetes zweites Referenzsignal heraus zu filtern, zwei identische Sätze von jeweils mindestens zwei Filtern, von denen ein erster dazu dient aus dem aufbereiteten ersten Hilfssignal das aufbereitete erste Sensorsignal und das aufbereiteten erste Referenzsignal heraus zu filtern, und von denen ein zweiter dazu dient aus dem aufbereiteten zweiten Hilfssignal das aufbereitete zweite Sensorsignal und das aufbereitete zweite Referenzsignal heraus zu filtern.

Gemäß einer Ausgestaltung weisen die Eingangszweige einen Verstärker und einen Analog-Digital-Wandler auf, und die Filter sind digitale Filter.

Gemäß einer Weiterbildung ist der Referenzsignal-Generator ein Spannungs-Generator oder ein digitaler Referenzsignal-Generator, und jedes Referenzsignal ist eine oszillierende Spannung mit einer vorgegebenen Frequenz.

Gemäß einer Weiterbildung weist der erste Sensor eine Spule auf, weist der zweite Sensor eine Spule auf, und der Referenzsignal-Generator ist mit einem ersten Anschluss der Spule des ersten Sensors und einem ersten Anschluss der Spule des zweiten Sensors verbunden. Ein zweiter Anschluss der Spule des ersten Sensors ist mit einem Eingang des ersten Eingangszweig und ein zweiter Anschluss der Spule des zweiten Sensors ist mit einem Eingang des zweiten Eingangszweigs verbunden.

Weiter besteht die Erfindung in einem Verfahren zur Kompensation einer Phasen- oder Laufzeitdifferenz von in getrennten Eingangszweigen aufbereiteten Sensorsignalen eines Coriolis Massendurchflussmessers gemäß dem Anspruch 6, bei dem

- ein Referenzsignal parallel allen Sensorsignalen überlagert wird,
- jedes dieser durch Überlagerung gebildete Hilfssignal einen eigenen Eingangszweig durchläuft,
- aus den in den Eingangszweigen aufbereiteten Hilfssignalen jeweils ein dem Eingangszweig zugeordnetes aufbereitetes Sensorsignal und ein zugeordnetes aufbereitetes Referenzsignal herausgefiltert wird,
- eine zwischen jeweils zwei aufbereiteten Referenzsignalen bestehende Phasen- oder Laufzeitdifferenz bestimmt wird, und
- anhand dieser Phasen- oder Laufzeitdifferenz eine Kompensation einer Phasen- oder Laufzeitdifferenz zwischen zwei Sensorsignalen erfolgt, die in den beiden Eingangszweigen aufbereitet wurden, in denen auch die beiden Referenzsignale aufbereitet wurden.

Gemäß einer Weiterbildung des Verfahrens wird die zwischen jeweils zwei aufbereiteten Referenzsignalen bestehende Phasen- oder Laufzeitdifferenz über einen Zeitraum erfasst und zur Kompensation der Phasen- oder Laufzeitdifferenz zwischen zwei aktuell aufbereiteten Sensorsignalen werden die über den Zeitraum erfassten Phasen- oder Laufzeitdifferenzen der zugeordneten Referenzsignale herangezogen.

Gemäß einer Weiterbildung des Verfahrens werden zwei oder mehr Referenzsignale mit unterschiedlicher Frequenz eingesetzt. Für jedes Referenzsignal wird eine Phasen- oder Laufzeitdifferenz der zugehörigen aufbereiteten Referenzsignale bestimmt. Es wird eine Frequenzabhängigkeit der durch die Eingangszweige bedingten Phasen- oder Laufzeitdifferenzen zwischen den aufbereiteten Referenzsignalpaaren bestimmt, und bei der Kompensation wird die Frequenz der Sensorsignale und die Frequenzabhängigkeit der durch die Eingangszweige bedingten Phasen- oder Laufzeitdifferenzen berücksichtigt.

Gemäß einer weiteren Weiterbildung des Verfahrens wird eine Amplitude des Referenzsignals mit den Amplituden der zugehörigen aufbereiteten Referenzsignale verglichen und hieraus für jeden Eingangszweig ein Verstärkungsfaktor bestimmt wird, der bei einer weiteren Verarbeitung der aufbereiteten Sensorsignale berücksichtigt wird.

Weiter umfasst die Erfindung ein Verfahren gemäß dem Anspruch 10 zur Verwendung eines erfindungsgemäßen Coriolis Massendurchflussmessers zur Bestimmung einer Laufzeit, die ein Sensorsignal dieses erfindungsgemäßen Coriolis Massendurchflussmessers zum Durchlaufen eines Eingangszweigs dieses erfindungsgemäßen Coriolis Massendurchflussmessers benötigt, bei dem der Referenz-Signalgenerator einen Referenzsignalzug erzeugt, der den Eingangszweig durchläuft und die hierfür benötigte Laufzeit gemessen wird.

Ein Vorteil der Erfindung besteht darin, dass das Übertragungsverhalten der Eingangsschaltung permanent überwacht wird. Eine aufwendige Kalibration der Eingangsschaltung und deren Implementierung und Umsetzung im Gerät wird hierdurch überflüssig.

Ein weiterer Vorteil der Erfindung besteht darin, dass durch die permanente Überwachung auch dann Messfehler vermieden werden können, wenn in der Eingangsschaltung anstelle von hochwertigen Bauteilen mit geringen Schwankungen im Übertragungsverhalten kostengünstigere Elemente eingesetzt werden, die unter Umständen deutlich größere Schwankungen im Übertragungsverhalten aufweisen können.

Die Erfindung und weitere Vorteile werden nun anhand der Figuren der Zeichnung, in denen mehrere Ausführungsbeispiele dargestellt sind, näher erläutert; gleiche Teile sind in den Figuren mit gleichen Bezugszeichen versehen.

Fig. 1 zeigt einen Messaufnehmer eines Coriolis Massendurchflussmessers;

Fig. 2 zeigt eine an Sensoren angeschlossene Eingangsschaltung des erfindungsgemäßen Coriolis Massendurchflussmessers;

Fig. 3 zeigt eine erste Schaltung zur Einspeisung des Referenzsignals, bei der ein Referenzsignal-Generator an die Spulen der Sensoren angeschlossen ist.;

Fig. 4 zeigt eine zweite Schaltung zur Einspeisung des Referenzsignals, bei der das Referenzsignal den Sensorsignalen über Differenzverstärker überlagert wird;

Fig. 5 zeigt eine an die Sensoren angeschlossene Eingangsschaltung, die drei Referenzsignal-Generatoren aufweist; und

Fig. 6 zeigt eine schaltungs-bedingte Laufzeitdifferenz in Abhängigkeit von der der Frequenz.

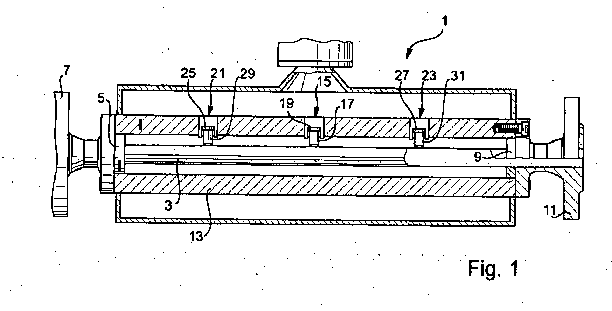

Fig. 1 zeigt einen Messaufnehmer 1 eines Coriolis Massendurchflussmessers. Der Messaufnehmer 1 ist im Messbetrieb in einer in Fig. 1 nicht dargestellten Rohrleitung angeordnet, durch die ein Medium, z.B. ein Gas oder eine Flüssigkeit, fließt, dessen Massendurchfluss gemessen werden soll. Der Messaufnehmer 1 weist ein einziges gerades Messrohr 3 auf, das einlassseitig über eine Endplatte 5 an einem Flansch 7 und auslassseitig über eine Endplatte 9 an einem Flansch 11 fixiert ist. Die Flansche 7, 11 und die Endplatten 5, 9 sind an oder in einem Trägerrohr 13 befestigt.

Die Erfindung ist nicht auf diesen speziellen Messaufnehmer 1 mit einem einzigen geraden Messrohr 3 beschränkt. Sie kann auch in Verbindung mit weiteren bekannten Messaufnehmern eingesetzt werden. Zu erwähnen sind z.B. Messaufnehmer mit einem Messrohr mit Auslegermasse, wie z.B. in der EP-A 97810559 beschrieben, Messaufnehmer mit einem gebogenen Messrohr,

wie z.B. in der EP-A 96 10 942 beschrieben, sowie Messaufnehmer mit zwei parallelen, geraden oder gebogenen Messrohren, wie sie z.B. in der US-A 4,793,191 oder der US-A 4,127,028, beschrieben sind.

Das Messrohr 3 wird im Messbetrieb zu Schwingungen angeregt. Zur Erzeugung der Messrohrschwingung ist in der Mitte zwischen den beiden Endplatten 5, 9 am Messrohr 3 ein Schwingungserreger 15 angeordnet.

Als Schwingungserreger 15 eignet sich z.B. ein elektromagnetischer Antrieb bestehend aus einem Permanentmagnet 17 und einer Spule 19. Die Spule 19 ist am Trägerrohr 13 und der Permanentmagnet 17 ist am Messrohr 3 befestigt. Über einen in der Spule 19 fließenden Strom lassen sich Amplitude und Frequenz einer in der Zeichenebene verlaufenden Biegeschwingung des Messrohrs 3 steuern. Das Schwingungsgebilde wird dabei vorzugsweise in Resonanz betrieben.

In der Zeichenebene treten Coriolis Kräfte auf, die bewirken, dass nicht alle Punkte entlang des Messrohrs 3 in Phase schwingen. Die Schwingung des Messrohrs 3 wird mit Hilfe von einem ersten und einem zweiten Sensor 21, 23 erfasst. Die Sensoren 21, 23 sind vorzugsweise symmetrisch zum Schwingungserreger 15 angeordnet. Als Sensoren 21, 23 eignen sich z.B. elektromagnetische Wandler, die jeweils eine am Trägerrohr 13 befestigte Spule 25, 27 und einen am Messrohr 3 angeordneten Permanentmagneten 29, 31 aufweisen. Eine Bewegung des Messrohrs 3 bewirkt eine Bewegung der Permanentmagnete 29, 31 in den Spulen 25, 27 und damit eine Induktionsspannung in der jeweiligen Spule 25, 27. Die Induktionsspannungen können über die Spulen 25, 27 abgegriffen werden und stehen hierüber als von den Sensoren 21, 23 erzeugte erste und ein zweite analoge Sensorsignale S1, S2 zur Verfügung. Die beiden Sensorsignale S1, S2 weisen die gleiche Frequenz $f_s$ auf und sind gegeneinander phasenverschoben. Die zwischen den Sensorsignalen S1, S2 bestehende Phasendifferenz ist ein Maß für den Massendurchfluss. Die Frequenz $f_s$ liegt typischer Weise in der Größenordnung von einigen Hundert Hertz.

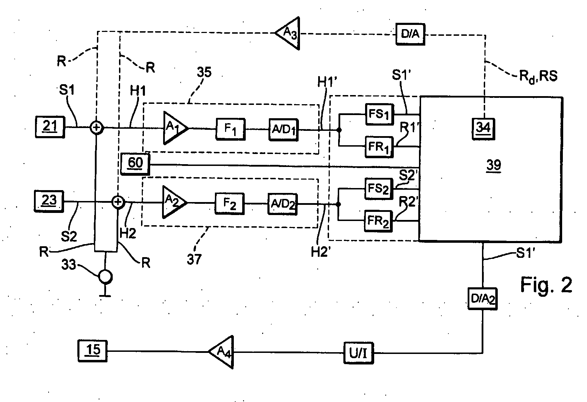

Fig. 2 zeigt eine an die Sensoren 21, 23 angeschlossene Eingangsschaltung des erfindungsgemäßen Coriolis Massendurchflussmessers. Die Eingangsschaltung umfasst einen Referenzsignal-Generator 33, der dem ersten und dem zweiten Sensorsignal S1, S2 ein und dasselbe Referenzsignal R überlagert. Vorzugsweise ist der Referenzsignal-Generator 33 ein Spannungs-Generator, der den Sensorsignalen S1, S2 eine Spannung überlagert. Dies bietet bei dem beschriebenen Massendurchflussmesser den Vorteil, dass ein Stromfluss, der sich unter Umständen über die Spulen 25, 27 auf die Messrohrschwingung auswirken könnte, vermieden wird. Das Referenzsignal R ist vorzugsweise eine oszillierende Spannung mit einer vorgegebenen Frequenz $f_R$, die von der Frequenz $f_s$ der Sensorsignale S1, S2 unterscheidbar ist. Bei einer Frequenz $f_s$ der Sensorsignale von z.B. 800 Hz, kann die Frequenz $f_R$ des Referenzsignals R z.B. 300 Hz betragen. Als Referenzsignal-Generatoren eignen sich z.B. spannungsgesteuerte Oszillatoren (VCO).. Ebenso kann das Referenzsignal R durch einen digitalen Referenzsignal-Generator 34, der z.B. Bestandteil einer ohnehin vorhandenen Signalverarbeitungseinheit 39 ist, in digitaler Form, z.B. in Form eines Sinus, generiert werden. Das digitale Referenzsignal $R_d$ wird dann, wie in Fig. 2 durch die gestrichelt dargestellten Verbindungen, mittels eines Digital-Analog Wandlers D/A und gegebenenfalls eines Verstärker A3 in ein analoges Referenzsignal R umgewandelt und den Sensorsignalen S1, S2 überlagert. Digitale Referenzsignal-Generatoren bieten den Vorteil, das eine Phasenlage des generierten digitalen Referenzsignals $R_d$ sehr genau bekannt ist.

Durch die Überlagerung des ersten und des zweiten Sensorsignals S1, S2 mit dem Referenzsignal R entstehen ein erstes und ein zweites Hilfssignal H1, H2.

Das erste Hilfssignal H1 ist einem ersten Eingangszweig 35 zugeführt, der dazu dient, das aus dem ersten Sensorsignal S1 und dem überlagerten Referenzsignal R gebildete ersten Hilfssignal H1 aufzubereiten. Analog ist das zweite Hilfssignal H2 einem zweiten Eingangszweig 37 zugeführt, der dazu dient, das aus dem zweiten Sensorsignal S2 und dem überlagerten Referenzsignal R gebildete zweite Hilfssignal H2 aufzubereiten.

Die Eingangszweige 35, 37 dienen der Signalaufbereitung. Die Signalaufbereitung kann z.B. eine Verstärkung, eine Filterung und/oder eine Digitalisierung umfassen. Die Eingangszweige können vielgestaltig ausgeführt sein. In dem dargestellten Ausführungsbeispiel sind daher nur typischer Weise vorhandene Elemente der Eingangszweige 35, 37 beispielhaft dargestellt. Andere unter Umständen sehr viel aufwendigere Ausführungsformen sind ebenfalls einsetzbar. Vorzugsweise sind die beiden Eingangszweige 35, 37 identisch aufgebaut. Die dargestellten Eingangszweige 35, 37 weisen jeweils einen Verstärker A1, A2, einen Filter F1, F2, sowie einen Analog-Digital-Wandler A/D1, A/D 2 auf. Die Filter F1, F2 sind z.B. passive Filter oder Anti-Aliasing Filter. Derartige Bauteile erzeugen eine ungenügend spezifizierte und driftende Phasenverschiebung bzw. Phasendrehung. Auch zwei völlig identisch aufgebaute Eingangszweige 35, 37 weisen daher ein unterschiedliches Übertragungsverhalten auf. Entsprechend kann hierdurch auch bei einer zeitgleichen Aufbereitung zweier identischer Signale am Ausgang der Eingangszweige 35, 37 zwischen den aufbereiteten Signalen eine Phasen- bzw. Laufzeitdifferenz bestehen. Diese schaltungs-bedingte Phasen- bzw. Laufzeitdifferenz ist umso größer, je mehr sich die Eingangszweige voneinander unterscheiden. Die schaltungs-bedingte Phasen- bzw. Laufzeitdifferenz ist unerwünscht, da die tatsächlich zwischen den Sensorsignalen S1, S2 bestehende Phasen- bzw. Laufzeitdifferenz eine vom Massendurchfluss abhängige Messgröße ist, die mit dem Coriolis Massendurchflussmesser bestimmt wird. Jede schaltungs-bedingte Phasen- bzw. Laufzeitdifferenz wirkt sich daher negativ auf die Messgenauigkeit aus. Bei herkömmlichen Coriolis Massendurchflussmessern war man bestrebt, diesen Fehler möglichst klein zu halten, indem z.B. in den Eingangszweigen nur Bauteile mit einer extrem hohen Bandbreite eingesetzt werden. Beispielsweise wurden bei einer Frequenz $f_s$ der Sensorsignale S1, S2 von 800 Hz Bauteile mit Bandbreiten in der Größenordnung von 100 MHz verwendet. Die Erfindung vermeidet diese Messungenauigkeit. Entsprechend können Bauteile mit deutlich geringerer Bandbreite eingesetzt werden. Erfindungsgemäß weisen die Eingangszweige 35, 37 vorzugsweise eine Bandbreite auf, die größer als die Frequenz $f_R$ des Referenzsignals R und größer als die Frequenz $f_s$ der Sensorsignale S1, S2 ist. Bei einer Frequenz $f_R$ des Referenzsignals R von 300 Hz und einer Frequenz $f_s$ der Sensorsignale S1, S2 von 800 Hz genügt beispielsweise eine Bandbreite in der Größenordnung von 1 MHz.

Erfindungsgemäß wird den Sensorsignalen S1, S2 das Referenzsignal R überlagert, und die durch diese Überlagerung gebildeten Hilfssignale H1, H2 durchlaufen jeweils einen der Eingangszweige 35, 37. Im Anschluss an den ersten Eingangszweig 35 sind Mittel vorgesehen, die dazu dienen dazu aus dem aufbereiteten ersten Hilfssignal H1 ein aufbereitetes erstes Sensorsignal S1' und ein aufbereitetes erstes Referenzsignal R1 heraus zu filtern. Im Anschluss an den zweiten Eingangszweig 37 sind Mittel vorgesehen, die dazu dienen aus dem aufbereiteten zweiten Hilfssignal H2 ein aufbereitetes zweites Sensorsignal S2' und ein aufbereitetes zweites Referenzsignal R2 heraus zu filtern,

In dem dargestellten Ausführungsbeispiel umfassen diese Mittel zwei identische Sätze von jeweils zwei Filtern FS1 und FR1, FS2 und FR2, von denen ein erster dazu dient, aus dem am Ausgang des ersten Eingangszweigs 35 anstehenden aufbereiteten ersten Hilfssignal H1' ein aufbereitetes erstes Sensorsignal S1' und ein aufbereitetes erstes Referenzsignal R1' heraus zu filtern, und von denen ein zweiter dazu dient, aus dem am Ausgang des zweiten Eingangszweigs 37 anstehenden aufbereiteten zweiten Hilfssignal H2' ein aufbereitetes zweites Sensorsignal S2' und ein aufbereitetes zweites Referenzsignal R2' heraus zu filtern. Da die aufbereiteten Hilfssignale H1' und H2' in digitaler Form vorliegen, sind die Filter FS1 und FR1, FS2 und FR2 digitale Filter. Die beiden Mittel können aber auch sehr viel komplexere Strukturen aufweisen. Die Trennung der jeweiligen aufbereiteten Sensorsignale S1', S2' von den aufbereiteten Referenzsignalen R1', R2' kann z.B. unter Verwendung von Mischern und weiteren Bauteilen erfolgen.

Es sind Mittel 39 vorgesehen, die dazu dienen, eine Phasen- oder Laufzeitdifferenz zwischen dem ersten aufbereiteten Referenzsignal R1' und dem zweiten aufbereiteten Referenzsignal R2' zu bestimmen. In dem dargestellten Ausführungsbeispiel wird diese Aufgabe von einem digitalen Signalprozessor 39 übernommen, an dessen Eingängen die Ausgangssignale der Filter FS1, FR1, FS2 und FR2 anliegen. Die Filter FS1, FR1, FS2 und FR2 sind hier zum besseren Verständnis als eigenständige Bauteile dargestellt. Moderne Signalprozessoren weisen eine hohe Funktionalität auf und sind sehr vielseitig einsetzbar. Insbesondere sind sie sehr gut geeignet die Funktion der Filter FS1, FR1, FS2 und FR2 zu übernehmen. Entsprechend können die Filter FS1, FR1, FS2 und FR2 im Signalprozessor 39 integriert sein. Dies ist in Fig. 2 durch eine gestrichelt eingezeichnete Linie dargestellt.

Die Phasendifferenz $\Delta\varphi(R1', R2')$ ergibt sich unmittelbar aus dem Vergleich des ersten und des zweiten aufbereiteten Referenzsignals R1', R2' und kann auf vielfältige Weise mittels bekannter Verfahren, wie z.B. einem Vergleich der Nulldurchgänge, Korrelationsbildung u.ä., abgeleitet werden. Die zugehörige Laufzeitdifferenz $\Delta t(R1', R2')$ ist gleich dem Quotienten aus der Phasendifferenz $\Delta\varphi((R1', R2')$ und der Frequenz $f_R$ des Referenzsignals R.

$$[0099] \qquad \Delta t(R1', R2') = \Delta\varphi(R1', R2') / f_R$$

Da die beiden aufbereiteten Referenzsignale R1', R2' auf ein und dasselbe Referenzsignal R zurück zu führen sind, ist die Laufzeitdifferenz $\Delta t(R1', R2')$ der aufbereiteten Referenzsignale R1', R2' eine rein schaltungs-bedingte Laufzeitdifferenz und die Phasendifferenz $\Delta\varphi(R1', R2')$ ist eine rein schaltungs-bedingte Phasendifferenz. Dabei wird das Übertragungsverhalten der gesamten Eingangsschaltung vom Überlagerungspunkt bis zum Ausgang erfasst.

Die schaltungs-bedingte Laufzeitdifferenz ist in erster Näherung frequenzunabhängig. Entsprechend besteht zwischen den aufbereiteten Sensorsignalen S1', S2' eine Laufzeitdifferenz $\Delta t(S1', S2')$, die in erster Näherung gleich der Summe der schaltungs-bedingten Laufzeitdifferenz und einer vom Massendurchfluss abhängigen tatsächlich zwischen den Sensorsignalen S1, S2 vorhandenen Laufzeitdifferenz $\Delta t(S1, S2)$ ist.

Erfindungsgemäß sind Mittel 39 zur Korrektur der Phasen- oder Laufzeitdifferenz $\Delta\varphi(S1', S2')$, $\Delta t(S1', S2')$ zwischen dem ersten und dem zweiten aufbereiteten Sensorsignal S1', S2' vorgesehen. Die Korrektur erfolgt anhand der zuvor abgeleiteten Phasen- oder Laufzeitdifferenz $\Delta\varphi(R1', R2')$, $\Delta t(R1', R2')$ zwischen dem ersten und dem zweiten aufbereiteten Referenzsignal R1', R2' . Die Mittel 39 umfassen in dem dargestellten Ausführungsbeispiel den digitalen Signalprozessor. Dort wird anhand der Phasendifferenz $\Delta\varphi(R1', R2')$ oder der Laufzeitdifferenz $\Delta t(R1', R2')$ zwischen dem ersten und dem zweiten aufbereiteten Referenzsignal R1', R2' eine Korrektur der aufbereiteten Sensorsignale S1', S2' vorgenommen.

Vorzugsweise werden die Sensorsignale S1' und S2' nicht einzeln korrigiert, sondern es wird unmittelbar eine Korrektur der gewünschten Messgrößen, d.h. der Phasen- oder Laufzeitdifferenz vorgenommen. Die Phasen- und die Laufzeitdifferenz $\Delta\varphi(S1', S2')$, $\Delta t(S1', S2')$ der aufbereiteten Sensorsignale S1', S2' wird dabei beispielsweise genauso bestimmt wie die Phasen- und die Laufzeitdifferenz $\Delta\varphi(R1', R2')$, $\Delta t(R1', R2')$ der aufbereiteten Referenzsignale R1', R2'. Die Bestimmung erfolgt vorzugsweise ebenfalls im digitalen Signalprozessor 39.

Die Korrektur der Laufzeitdifferenz $\Delta t(S1', S2')$ der aufbereiteten Sensorsignale S1', S2' erfolgt vorzugsweise gemäß folgender Berechnungsvorschrift:

$$\Delta t(S1', S2')_{kor} = \Delta t(S1', S2') - \Delta t(R1', R2')$$

worin

$\Delta t(S1', S2')_{kor}$ die korrigierte Laufzeitdifferenz zwischen den aufbereiteten Sensorsignale S1', S2',
$\Delta t(S1', S2')$ die gemessene Laufzeitdifferenz zwischen den aufbereiteten Sensorsignale S1', S2', und
$\Delta t(R1', R2')$ die schaltungs-bedingte Laufzeitdifferenz zwischen den aufbereiteten Referenzsignalen R1', R2' bedeuten.

Die Korrektur der Phasendifferenz $\Delta\varphi(S1', S2')$ der aufbereiteten Sensorsignale S1', S2' erfolgt vorzugsweise gemäß folgender Berechnungsvorschrift:

$$\Delta\varphi(S1', S2')_{kor} = \Delta\varphi(S1', S2') - \Delta t(R1', R2') \, 2 \, \pi \, f_s$$

worin

$\Delta\varphi(S1', S2')_{kor}$ die korrigierte Phasendifferenz zwischen den aufbereiteten Sensorsignale S1', S2',
$\Delta\varphi(S1', S2')$ die gemessene Phasendifferenz zwischen den aufbereiteten Sensorsignale S1', S2',
$t(R1', R2')$ die schaltungs-bedingte Laufzeitdifferenz zwischen den aufbereiteten Referenzsignalen R1', R2' , und
$f_s$ die Frequenz der Sensorsignale S1, S2 bedeuten.

Weiter umfasst der Coriolis Massendurchflussmesser Mittel 39 zur Bestimmung des Massendurchflusses anhand der korrigierten aufbereiteten Sensorsignale S1', S2', insb. anhand der korrigierten Phasen- oder Laufzeitdifferenz $\Delta\varphi(S1', S2')_{kor}$, $\Delta t(S1', S2')_{kor}$ derselben.

Auch diese Mittel 39, sind in dem dargestellten Ausführungsbeispiel in der Form des digitalen Signalprozessors realisiert. Die Bestimmung des Massendurchflusses kann auf vielfältige bekannte Weise erfolgen. Dabei können alle bekannten Bestimmungsweisen eingesetzt werden, die als charakteristische Messgröße die Phasen- oder Laufzeitdifferenz der Sensorsignale verwenden. Die Bestimmung des Massendurchflusses kann beispielsweise anhand der Proportionalität zwischen der Laufzeitdifferenz der Sensorsignale und dem Massendurchfluss erfolgen. Proportionalitätskonstanten, sowie eventuell relevante Abhängigkeiten z.B. von der Temperatur oder der Dichte der Flüssigkeit, sind in der Regel gerätespezifisch und können in Form von Kalibrationsdaten im Gerät abgelegt und bei der Bestimmung durch entsprechende A1-gorithmen berücksichtigt werden.

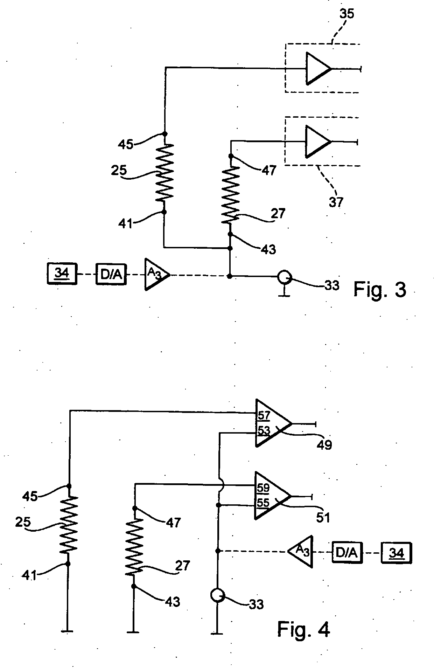

Die Überlagerung der Referenzsignale R kann auf vielfältige Weise erfolgen. In den Figuren 3 und 4 sind zwei Ausführungsbeispiele hierzu dargestellt, wie sie z.B. in Verbindung mit den in Fig. 1 dargestellten Spulen 25, 27 aufweisenden Sensoren 21, 23 einsetzbar sind.

Bei dem in Fig. 3 dargestellten Ausführungsbeispiel ist der Referenzsignal-Generator 33 ein spannungs-gesteuerter Oszillator, der mit einem ersten Anschluss 41 der Spule 25 und einem ersten Anschluss 43 der Spule 27 verbunden ist. Ein zweiter Anschluss 45 der Spule 25 ist mit einem Eingang des ersten Eingangszweigs 35 und ein zweiter Anschluss 47 der Spule 27 ist mit einem Eingang des zweiten Eingangszweigs 37 verbunden. Genauso kann hier der in Verbindung mit Fig. 2 bereits beschriebene digitale Referenzsignal-Generator 34 eingesetzt werden. Dies ist in Fig. 3 erneut durch gestrichelte Verbindungslinien dargestellt, durch die der digitale Referenzsignal-Generator 34 über den Digital-Analog Wandler D/A und gegebenenfalls den Verstärker A3 mit dem ersten Anschluss 41 der Spule 25 und dem ersten Anschluss 43 der Spule 27 verbunden ist.

Diese Beschaltungen bietet den Vorteil, dass sich die Induktionsspannung und die Spannung des Referenzsignals R überlagern, ohne dass durch das Referenzsignal R ein Stromfluss durch die Spulen 25, 27 erzeugt wird, der sich gegebenenfalls auf das Schwingungsverhalten des Messrohrs 3 auswirken könnte.

Bei dem in Fig. 4 dargestellten Ausführungsbeispiel wird die Überlagerung über den Eingangszweigen 35, 37 zugeordnete Summen- oder Differenzverstärker 49, 51 bewirkt. Die Summen- oder Differenzverstärker 49, 51 können dabei den Eingangszweigen 35, 37 vorgeschaltet sein, oder sie können Teil der Eingangszweige 35, 37 sein, indem sie z.B. an die Stelle der in Fig. 2 dargestellten Verstärker A1, A2 gesetzt werden. Auch hier sind, genau wie bei dem in Fig. 3 dargestellten Ausführungbeispiel, sowohl der analoge Referenzsignal-Generator 33 als auch der digitale Referenzsignal-Generator 34 einsetzbar. Der Referenzsignal-Generator 33 ist mit einem Bezugspotential, z.B. Masse oder einem Schaltungsnullpunkt, verbunden. Das Referenzsignal R liegt an einem ersten Eingang 53 des dem ersten Eingangszweig 35 zugeordneten Summen- oder Differenzverstärker 49 und an einem ersten Eingang 55 des dem zweiten Eingangszweig 37 zugeordneten Summen- oder Differenzverstärker 51 an. Die Spulen 25, 27 liegen über deren ersten Anschluss 41, 43 ebenfalls an dem Bezugspotential. Der zweite Anschluss 45 der Spule 25 ist mit einem zweiten Eingang 57 des dem ersten Eingangszweig 35 zugeordneten Summen- oder Differenzverstärkers 49 verbunden, und der zweite Anschluss 47 der Spule 27 ist mit einem zweiten Eingang 59 des dem zweiten Eingangszweig 37 zugeordneten Summen- oder Differenzverstärkers 51 verbunden.

Mit dem beschriebenen Coriolis Massendurchflussmesser wird, wie oben beschrieben, ein erfindungsgemäßes Verfahren zur Kompensation einer schaltungs-bedingten Phasen- oder Laufzeitdifferenz von in getrennten Eingangszweigen aufbereiteten Signalen eines Messgeräts, ausgeführt. Gemäß dem erfindungsgemäßen Verfahren wird ein Referenzsignal parallel mindestens zwei Signalen überlagert, und jedes dieser durch Überlagerung gebildete Hilfssignale durchläuft einen eigenen Eingangszweig. Aus den in den Eingangszweigen aufbereiteten Hilfssignalen wird jeweils ein dem Eingangszweig zugeordnetes aufbereitetes Signal und ein zugeordnetes aufbereitetes Referenzsignal herausgefiltert. Es wird eine zwischen jeweils zwei aufbereiteten Referenzsignalen bestehende Phasen- oder Laufzeitdifferenz bestimmt wird. Erfindungsgemäß erfolgt dann anhand dieser Phasen- oder Laufzeitdifferenz eine Kompensation einer Phasen- oder Laufzeitdifferenz zwischen jeweils zwei Signalen, die in den beiden Eingangszweigen aufbereitet wurden, in denen auch die beiden Referenzsignale aufbereitet wurden.

Dieses Verfahren ist nicht auf die Coriolis Durchflussmessung beschränkt. Es kann immer dann eingesetzt werden, wenn eine Kompensation einer schaltungs-bedingten Phasen- oder Laufzeitdifferenz von in getrennten Eingangszweigen aufbereiteten Signalen eines Messgeräts, gewünscht ist. Eine solche Kompensation ist immer dann von Vorteil, wenn die Phasen- oder Laufzeitdifferenz der Signale eine Messgröße ist, oder für die Bestimmung einer Messgröße von Bedeutung ist.

Das Verfahren ist auf eine beliebige Anzahl von Signalen und Eingangszweigen anwendbar. Als Beispiel seien hier Coriolis Massendurchflussmesser mit drei, vier oder mehr Sensoren und einer entsprechenden Anzahl von Eingangszweigen genannt. Die Kompensation kann dann gemäß dem erfindungsgemäßen Verfahren für jedes Paar aus zwei Signalen und die zugehörigen beiden Eingangszweige durchgeführt werden.

Die schaltungs-bedingte Phasen- oder Laufzeitdifferenz ist in der Regel abhängig von der Temperatur und dem Zustand der einzelnen Bauteile der Eingangszweige und ändert sich somit nur langsam. Die Genauigkeit des erfindungsgemäßen Verfahrens lässt sich daher zusätzlich verbessern, indem die zwischen jeweils zwei aufbereiteten Referenzsignalen bestehende schaltungs-bedingte Phasen- oder Laufzeitdifferenz über einen Zeitraum erfasst wird und zur Kompensation der Phasen- oder Laufzeitdifferenz zwischen zwei aktuell aufbereiteten Signalen, die über den Zeitraum erfassten Phasen- oder Laufzeitdifferenzen der zugeordneten aufbereiteten Referenzsignale herangezogen werden. Die Bestimmung der Länge des Zeitraumes, über den die Phasen- oder Laufzeitdifferenzen erfasst werden, kann anhand von Schätzwerten erfolgen oder beispielsweise anhand einer Temperaturmessung abgeleitet werden. Dabei wird vorzugsweise die Temperatur im Bereich der Eingangszweige 35, 37 gemessen. Hierzu ist indem in Fig. 2 dargestellten Ausführungsbeispiel ein Temperatursensor 60 vorgesehen, dessen Messergebnisse der Signalverarbeitung 39 zugeführt werden. Ist die gemessene Temperatur annähernd konstant, wird ein langer Zeitraum gewählt, ändert sich die Temperatur, so wird die Länge des Zeitraumes entsprechend verkürzt. Hierzu sind nachfolgend anhand des oben beschriebenen Beispiels des Coriolis Massendurchflussmessers zwei Beispiele angerührt.

Gemäß einer ersten Variante werden die zwischen jeweils zwei aufbereiteten Referenzsignalen R1', R2' bestehenden schaltungs-bedingte Phasen- oder Laufzeitdifferenzen $\Delta t(R1', R2')$, $\Delta\varphi(R1', R2')$ über einen Zeitraum erfasst, und es wird ein Mittelwert $\Delta T_1(R1', R2')$, $\Delta\Phi_1(R1', R2')$ aus zeitlich innerhalb eines Zeitintervalls liegenden auf einander folgenden Werten der Phasen- oder Laufzeitdifferenzen $\Delta t(R1', R2')$, $\Delta\varphi(R1', R2')$ gebildet. Die Bestimmung der korrigierten Phasen- oder Laufzeitdifferenzen der aufbereiteten Sensorsignale S1', S2', erfolgt dann, wie oben beschrieben, wobei an die Stelle der Phasen- und der Laufzeitdifferenz $\Delta t(R1', R2')$, $\Delta\varphi(R1', R2')$ der zugehörigen aufbereiteten Referenzsignale R1', R2' deren Mittelwert $\Delta T_1(R1', R2')$, $\Delta\Phi_1(R1', R2')$ tritt.

Gemäß einer zweiten Variante werden die zwischen jeweils zwei aufbereiteten Referenzsignalen R1', R2' bestehenden schaltungs-bedingte Phasen- oder Laufzeitdifferenzen $\Delta t(R1', R2')$, $\Delta\varphi(R1', R2')$ über einen Zeitraum erfasst, indem die aufbereiteten Referenzsignale R1', R2' über ein längeres Zeitintervall aufgenommen werden und Langzeitwerte $\Delta T_2(R1', R2')$, $\Delta\Phi_2(R1', R2')$ für die Phasen- oder Laufzeitdifferenzen ermittelt werden, indem die Phasen- oder Laufzeitdifferenz, wie beschrieben abgeleitet wird, wobei aber der gesamte innerhalb des Zeitintervalls aufgezeichnete Signalzug der aufbereiteten Referenzsignale R1', R2' einbezogen wird. Die Bestimmung der korrigierten Phasen- und Laufzeitdifferenzen der aufbereiteten Sensorsignale S1', S2', erfolgt dann, wie oben beschrieben, wobei an die Stelle der Phasen- und der Laufzeitdifferenz $\Delta t(R1', R2')$, $\Delta\varphi(R1', R2')$ der zugehörigen aufbereiteten Referenzsignale R1', R2' der entsprechende Langzeitwert $\Delta T_2(R1', R2')$, $\Delta\Phi_2(R1', R2')$ tritt.

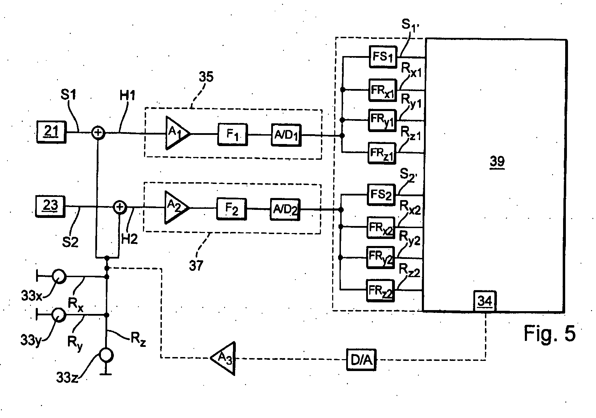

Eine weitere Verbesserung der Genauigkeit des Verfahrens lässt sich erzielen, indem die Frequenzabhängigkeit der Übertragungsverhalten der Eingangszweige berücksichtigt wird. Dieses verbesserte Verfahren ist nachfolgend am Beispiel des oben beschriebenen Coriolis Massendurchflussmessers näher erläutert. Fig. 5 zeigt ein Beispiel einer entsprechenden Schaltung.

Es werden zwei oder mehr Referenzsignale Rx, Ry, Rz mit unterschiedlicher Frequenz $f_{Rx}$, $f_{Ry}$, $f_{Rz}$ eingesetzt. Die Referenzsignale Rx, Ry, Rz können z.B. nacheinander über eine entsprechende Ansteuerung des in Fig. 2 dargestellten Referenzsignal-Generators 33 eingespeist werden. Alternativ können sie, wie in Fig. 5 dargestellt, zeitgleich durch eine entsprechende Anzahl von Referenzsignal-Generatoren 33x, 33y, 33z bereitgestellt und den Sensorsignalen S1, S2 überlagert werden. Genau wie bei den vorangegangenen Ausführungsbeispielen können auch hier digitale Referenzsignal-Generatoren 34 eingesetzt werden, deren digitale Referenzsignale $R_d$ über Digital-Analog Wandler D/A und gegebenenfalls Verstärker A3 in analoge Referenzsignale Rx, Ry, Rz umgewandelt werden. Diese Variante ist in Fig. 5 erneut mittels einer gestrichelten Linienführung dargestellt. Dabei ist der digitale Referenzsignal-Generator 34, bzw. sind die digitalen Referenzsignal-Generatoren 34 im Signalprozessor 39 integriert. Durch die Überlagerung werden jeweils zwei Hilfssignale H1, H2 gebildet, die die zugeordneten Eingangszweige 35, 37 durchlaufen. Anschließend wird für jedes Referenzsignal Rx, Ry, Rz eine Phasen- oder Laufzeitdifferenz $\Delta t(Rx1, Rx2)$, $\Delta\varphi(Rx1, Rx2)$, $\Delta t(Ry1, Ry2)$, $\Delta\varphi(Ry1, Ry2)$ und $\Delta t(Rz1, Rz2)$, $\Delta\varphi(Rz1, Rz2)$ der zugehörigen aufbereiteten Referenzsignale Rx1 und Rx2, Ry1 und Ry2, sowie Rz1 und Rz2 bestimmt.

Hierzu steht erneut Mittel zur Verfügung, die die Auftrennung der aufbereiteten Hilfssignale H1', H2' in die einzelnen Komponenten bewirken. Beispielsweise steht am Ausgang jedes Eingangszweiges 35, 37 jeweils ein Filter FS1 bzw. FS2 für das aufbereitete Sensorsensorsignal S1' bzw. S2' und jeweils ein Filter FRx1 bzw. FRx2, FRy1 bzw. FRy2 und FRz1 bzw. FRz2 für jedes aufbereitete Referenzsignal Rx1 bzw. Rx2, Ry1 bzw. Ry2, und Rz1 bzw. Rz2 zur Verfügung. Die Bestimmung der Phasen- oder Laufzeitdifferenzen $\Delta t$(Rx1, Rx2), $\Delta\varphi$(Rx1, Rx2), $\Delta t$(Ry1, Ry2), $\Delta\varphi$(Ry1, Ry2) und $\Delta t$(Rz1, Rz2), $\Delta\varphi$(Rz1, Rz2) der zugehörigen aufbereiteten Referenzsignale Rx1 und Rx2, Ry1 und Ry2, Rz1 und Rz2 erfolgt auf die gleiche Weise, wie die oben bereits beschriebene Bestimmung der Phasen- oder Laufzeitdifferenzen $\Delta t$(R1', R2'), $\Delta\varphi$(R1', R2').

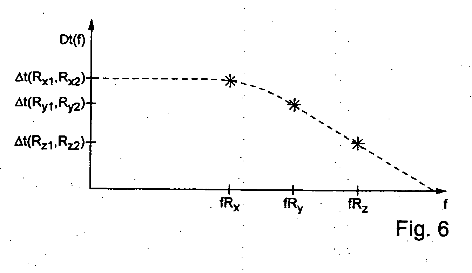

Anhand der ermittelten Phasen- oder Laufzeitdifferenzen $\Delta t$(Rx1, Rx2), $\Delta\varphi$(Rx1, Rx2), $\Delta t$(Ry1, Ry2), $\Delta\varphi$(Ry1, Ry2) und $\Delta t$(Rz1, Rz2), $\Delta\varphi$(Rz1, Rz2) der aufbereiteten Referenzsignalpaare Rx1 und Rx2, Ry1 und Ry2, sowie Rz1 und Rz2 wird eine Frequenzabhängigkeit einer durch die Eingangszweige 35, 37 bedingten Phasen- oder Laufzeitdifferenz $\Delta t(f)$, $\Delta\varphi(f)$ bestimmt. In Fig. 6 ist die durch die Eingangszweige 35, 37 bedingte Laufzeitdifferenz $\Delta t(f)$ als Funktion der Frequenz f dargestellt, wobei die anhand der einzelnen Referenzsignale Rx, Ry, Rz ermittelten Laufzeitdifferenzen $\Delta t$(Rx1, Rx2), $\Delta t$(Ry1, Ry2), $\Delta t$(Rz1, Rz2) als Messpunkte eingetragen sind. Die Kurve weist im niederfrequenten Bereich einen annähernd konstanten Verlauf auf, und fällt zu höheren Frequenzen hin ab. Die Frequenzabhängigkeit der durch die Eingangszweige 35, 37 bedingten Laufzeitdifferenz $\Delta t(f)$ kann beispielsweise durch eine Anpassung eines Polynoms an die Messpunkte ermittelt werden. Anhand eines solchen Polynoms lässt sich nachfolgend die zu erwartende Laufzeitdifferenz $\Delta t(f)$ für beliebige Frequenzen, insb. für die Frequenz $f_s$ der Sensorsignale S1, S2, in der Umgebung der Frequenzen $f_{Rx}$, $f_{Ry}$, $f_{Rz}$ der Messpunkte ermitteln.

Werden nur zwei unterschiedliche Referenzsignale, z.B. Rx und Ry, eingesetzt, so wird die Frequenzabhängigkeit der durch die Eingangszweige 35, 37 bedingten Laufzeitdifferenz $\Delta t(f)$ beispielsweise durch Interpolation ermittelt. Vorzugsweise werden in diesem Fall die Frequenzen $f_{Rx}$, $f_{Ry}$ so gewählt, dass eine größer und eine kleiner als die Frequenz $f_s$ der Sensorsignale S1, S2 ist. Auch hierdurch lässt sich nachfolgend die zu erwartende Laufzeitdifferenz $\Delta t(f)$ für beliebige Frequenzen, insb. für die Frequenz $f_s$ der Sensorsignale S1, S2, in der Umgebung der Frequenzen $f_{Rx}$, $f_{Ry}$ der Messpunkte ermitteln.

Anschließend erfolgt eine Kompensation der Phasen- oder Laufzeitdifferenz $\Delta t$(S1', S2'), $\Delta\varphi$(S1', S2') der aufbereiteten Sensorsignalen S1', S2' bei der sowohl die Frequenz $f_s$ der Sensorsignale S1, S2 als auch die Frequenzabhängigkeit der durch die Eingangszweige bedingten Laufzeitdifferenz $\Delta t(f)$ berücksichtigt werden.

Hierzu wird beispielsweise eine korrigierte Laufzeitdifferenz $\Delta t$(S1', S2')$_{kor}$ der aufbereiteten Sensorsignale S1', S2' gemäß folgender Berechnungsvorschrift bestimmt:

$\Delta t$(S1', S2')$_{kor}$ = $\Delta t$(S1', S2') - $\Delta t$($f_s$ worin $\Delta t$(S1', S2')$_{kor}$, die korrigierte Laufzeitdifferenz zwischen den aufbereiteten Sensorsignale S1', S2',

$\Delta t$(S1', S2') die gemessene Laufzeitdifferenz zwischen den aufbereiteten Sensorsignale S1', S2', $\Delta t(f_s)$ die schaltungs-bedingte frequenzabhängige anhand der Referenzsignale Rx, Ry, Rz oder Rx, Ry bestimmte Laufzeitdifferenz $\Delta t(f)$ bei der Frequenz $f_s$ der Sensorsignale S1, S2, und $f_s$ die Frequenz der Sensorsignale S1, S2 bedeuten.

Analog wird eine korrigierte Phasendifferenz $\Delta\varphi$(S1', S2')$_{kor}$ der aufbereiteten Sensorsignale S1', S2' gemäß folgender Berechnungsvorschrift bestimmt:

$\Delta\varphi$(S1', S2')$_{kor}$ = $\Delta\varphi$(S1', S2') - $\Delta t(f_s)$ 2 $\pi$ $f_s$ worin $\Delta\varphi$(S1', S2')$_{kor}$ die korrigierte Phasendifferenz zwischen den aufbereiteten Sensorsignale S1', S2', $\Delta\varphi$(S1', S2')die gemessene Phasendifferenz zwischen den aufbereiteten Sensorsignale S1', S2',

$\Delta t(f_s)$ die schaltungs-bedingte, frequenzabhängige anhand der Referenzsignale Rx, Ry, Rz oder Rx, Ry abgeleitete Laufzeitdifferenz $\Delta t(f)$ bei der Frequenz $f_s$ der Sensorsignale S1, S2, und $f_s$ die Frequenz der Sensorsignale S1, S2 bedeuten.

Völlig analog lässt sich die Frequenzabhängigkeit der durch die Eingangszweige 35, 37 bedingten Phasendifferenz $\Delta\varphi(f)$ bestimmen, anhand derer auf analoge Weise eine Kompensation der Phasen- oder Laufzeitdifferenz $\Delta\varphi$(S1', S2'), $\Delta\varphi$(S1', S2') der aufbereiteten Sensorsignalen S1', S2' vornehmbar ist, bei der sowohl die Frequenz $f_s$ der Sensorsignale S1, S2 als auch die Frequenzabhängigkeit der durch die Eingangszweige 35, 37 bedingten Phasendifferenz $\Delta\varphi(f)$ berücksichtigt wird.

Vorzugsweise wird anhand der Referenzsignale nicht nur das Übertragungsverhalten der Eingangszweige 35, 37 im Hinblick auf Phase und Laufzeit, sondern auch bezüglich der Amplitude erfasst. Die Kenntnis des Übertragungsverhaltens der Eingangsschaltung im Hinblick auf die Amplitude ist z.B. dann von besonderem Vorteil, wenn mit dem Messgerät zusätzlich die Viskosität der Flüssigkeit abgeleitet wird. Bei bekannten Verfahren zur Viskositätsbestimmung geht die Amplitude als Messgröße ein.

Wird nur ein Referenzsignal R zur Erfassung des Übertragungsverhaltens im Bezug auf die Amplitude eingesetzt, so wird beispielsweise dessen Amplitude $A_R$ mit den Amplituden $A_{R1}$, $A_{R2}$ der zugehörigen aufbereiteten Referenzsignale R1, R2 verglichen und hieraus für jeden Eingangszweig 35, 37 ein Verstärkungsfaktor V1, V2 bestimmt, der bei einer weiteren Verarbeitung der aufbereiteten Sensorsignale S1', S2' berücksichtigt wird. In der Regel genügt es hierbei die Amplituden der Maxima der einzelnen Signale zu betrachten. Die Verstärkungsfaktoren V1, V2 werden vorzugsweise im digitalen Signalprozessor 39 bestimmt, indem die Amplituden der Maxima bestimmt und hieraus die Verstärkungsfaktoren V1, V2 berechnet werden. Damit ergibt sich:

$$V1 := A_{R1} / A_R$$
$$V2 := A_{R2} / AR$$

worin V1 der Verstärkungsfaktor des ersten Eingangszweig 35,

V2 der Verstärkungsfaktor des zweiten Eingangszweigs 37,

$A_{R1}$ die Amplitude des im ersten Eingangszweig 35 aufbereiteten Referenzsignals R1,

$A_{R2}$ die Amplitude des im zweiten Eingangszweig 37 aufbereiteten Referenzsignals R2, und

$A_R$ die Amplitude des Referenzsignals R bedeuten.

Die Korrektur der Amplituden AS1', AS2' der aufbereiteten Sensorsignal S1', S2' erfolgt dann z.B. indem die jeweiligen aufbereiteten Sensorsignale S1', S2' mit dem Kehrwert des jeweils zugehörigen Verstärkungsfaktor V1, V2 multipliziert werden.

Analog zu den obigen Ausführungen zu den Phasen bzw. zu den Laufzeiten kann auch hier anhand von zwei oder mehr Referenzsignalen unterschiedlicher Frequenz eine Frequenzabhängigkeit der Verstärkungsfaktoren V1, V2 ermittelt und bei der Korrektur entsprechend berücksichtigt werden.

Weist mindestens einer der Eingangszweige 35, 37 als Verstärker A1, A2 einen Verstärker mit regelbarem Verstärkungsfaktor auf, so kann dessen Verstärkungsfaktor entsprechend den ermittelten Verstärkungsfaktoren V1, V2 so geregelt werden, dass beide Eingangszweige 35, 37 die gleiche Verstärkung bewirken.

Bei den oben beschriebenen Ausführungsformen der Erfindung wurden immer Hilfssignale H1, H2 eingesetzt, die durch Überlagerung der Sensorsignale S1, S2 mit einem Referenzsignal R, Rx, Ry, Rz gebildet wurden. Es ist aber auch möglich, die schaltungs-bedingte Phasen- oder Laufzeitdifferenz zwischen in getrennten Eingangszweigen aufbereiteten Sensorsignalen eines Coriolis Massendurchflussmessers, in Abwesenheit der Sensorsignale zu bestimmen.

Dies kann beispielsweise mittels der in den Figuren 2 oder 5 dargestellten Schaltungen erfolgen, indem die Sensoren 21, 23 abgekoppelt werden. Dies ist beispielsweise dann der Fall, wenn der Messaufnehmer 1 noch nicht an die nachfolgende Schaltung angeschlossen ist oder keine Schwingung angeregt wird. Alternativ kann ein Schalter eingefügt werden, durch den die Sensoren 21, 23 zuschaltbar sind.

Bei diesem Verfahren wird mindestens ein Referenzsignal R parallel zwei Eingangszweigen 35, 37 zugeführt und die am Ausgang der beiden Eingangszweige 35, 37 zwischen den aufbereiteten Referenzsignalen R1, R2 bestehende Phasen- oder Laufzeitdifferenz bestimmt. Hieraus wird, wie oben bereits anhand der vorangegangenen Ausführungsformen beschrieben eine für die Sensorsignale zu erwartende durch die Eingangszweige verursachte Phase- oder Laufzeitdifferenz abgleitet.

Das letztgenannte Verfahren kann dazu eingesetzt werden, die Präsens und die Funktionsfähigkeit der gesamten Eingangsschaltung des Massendurchflussmessers unabhängig vom Messaufnehmer 1 zu testen und eine Zustandsdiagnose und/oder eine Fehlermeldung zu generieren.

In der Coriolis Durchflussmesstechnik wird das das Messrohr 3 umfassende Schwingungsgebilde vorzugsweise zu Schwingungen mit dessen Resonanzfrequenz angeregt. Hierzu wird in der Regel eine Regelschleife vorgesehen, über die die Sensoren 23, 25 mit dem Schwingungserreger 15 verbunden sind. Dies geschieht z.B., wie in Fig. 2 dargestellt, indem ein aufbereitetes Sensorsignal S1' einem Digital-Analog-Wandler D/A$_2$ zugeführt wird. Eine Aus-gangsspannung des Digital-Analog-Wandlers D/A$_2$ wird mittels eines Spannungs-Strom-Wandlers U/I in einen Strom I umgewandelt, der über einen regelbaren Verstärker A4 als Erregerstrom I$_{err}$ dem Schwingungserreger 15 zugeführt wird. Ein durch die Spule 19 des Schwingungserregers 15 fließender Erregerstrom I$_{err}$ bewirkt eine Schwingung des Schwingungsgebildes, die über die Sensoren 21, 23 und die Eingangszweige 35, 37 aufgenommen wird. Um Resonanz zu erzielen, ist eine phasenrichtige Rückkopplung erforderlich. Dies wird z.B. durch eine entsprechende Einstellung einer Verzögerungszeit zwischen einem Empfang der Sensorsignale S1, S2 und deren Rückkopplung auf den Schwingungserreger 15 erreicht. Die Verzögerungszeit wird vorzugsweise im digitalen Signalprozessor 39 durch eine verzögerte Weiterleitung erzielt. Vorteilhafter Weise wird die Verzögerungszeit anhand einer Laufzeit bestimmt, die Signale benötigen, um die gesamte Regelschleife vom digitalen Signalprozessor 39 über den Digital-Analog-Wandler D/A$_2$, den Schwingungserreger 15, die Sensoren 21, 23, die Eingangszweige 35, 37 zurück zum digitalen Signalprozessor 39 zu durchlaufen.

Dabei stellt eine Laufzeit T, die die Sensorsignale S1, S2 benötigen, um die Eingangszweige 35 bzw. 37 zu durchlaufen, eine in der Regel vorab unbekannte und variable Größe dar. Diese Laufzeit T kann anhand der Referenzsignale sehr genau bestimmt werden. Dies ist nachfolgend anhand des in Fig. 2 dargestellten Ausführungsbeispiels näher erläutert. Hierzu wird vorzugsweise mittels des in Fig. 2 dargestellten digitalen Referenzsignal-Generators 34 ein kurzer Referenzsignalzug RS erzeugt, der über den digitalen Signalprozessor 39 dem Digital-Analog-Wandler D/A zugeführt wird. Dabei wird ein Zeitpunkt der Absendung des Referenzsignalzuges RS im digitalen Signalprozessor 39 erfasst. Dies kann beispielsweise in der Form geschehen, dass mit der Absendung eine Zeitmessung gestartet wird. Der Referenzsignalzug RS durchläuft die Eingangszweige 35, 37 und trifft wieder beim digitalen Signalprozessor 39 ein. Der Zeitpunkt der Rückkehr des Signalzuges RS wird im digitalen Signalprozessor 39 erfasst, und die Zeitmessung beendet. Anhand der Zeitdifferenz zwischen der Absendung und der Rückkehr des Signalzuges RS wird die gesuchte Laufzeit T bestimmt und kann für jeden Eingangszweig 35, 37 getrennt ermittelt werden.

|  | **Tabelle 1** |
|---|---|
| 1 | Messaufnehmer |
| 3 | Messrohr |
| 5 | Endplatte |
| 7 | Flansch |
| 9 | Endplatte |
| 11 | Flansch |
| 13 | Trägerrohr |
| 15 | Schwingungserreger |
| 17 | Permanentmagnet |
| 19 | Spule |
| 21 | Sensor |
| 23 | Sensor |
| 25 | Spule |
| 27 | Spule |
| 29 | Permanentmagnet |
| 31 | Permanentmagnet |
| 33 | Referenzsignal-Generator |
| 35 | Eingangszweig |
| 37 | Eingangszweig |
| 39 | digitaler Signalprozessor |
| 41 | erster Anschluss |
| 43 | erster Anschluss |
| 45 | zweiter Anschluss |
| 47 | zweiter Anschluss |
| 49 | Differenzverstärker |
| 51 | Differenzverstärker |
| 53 | erster Eingang |
| 55 | erster Eingang |
| 57 | zweiter Eingang |
| 59 | zweiter Eingang |

**Patentansprüche**

1. Coriolis-Massendurchflussmesser mit

   - einem Messrohr (3), das im Messbetrieb zu Schwingungen angeregt wird und von einer Flüssigkeit durchströmt wird, deren Massendurchfluss zu messen ist,
   - einem ersten und einem zweiten Sensor (21, 23) zur Erfassung einer vom Massendurchfluss abhängigen Schwingung des Messrohrs (3) und zur Erzeugung eines ersten und eines zweiten Sensorsignals (S1, S2),
   - mindestens einem Referenzsignal-Generator (33, 33x, 33y, 33z, 34), der dem ersten und dem zweiten Sensorsignal (S1, S2) ein und dasselbe Referenzsignal (R, Rx, Ry, Rz) überlagert,
   - einem ersten Eingangszweig (35), zur Aufbereitung eines aus dem ersten Sensorsignal (S1) und dem überlagerten Referenzsignal (R, Rx, Ry, Rz) gebildeten ersten Hilfssignals (H1),
   - einem zweiten Eingangszweig (35), zur Aufbereitung eines aus dem zweiten Sensorsignal (S2) und dem überlagerten Referenzsignal (R, Rx, Ry, Rz) gebildeten zweiten Hüfssignals (H2),
   - Mitteln, die dazu dienen aus dem aufbereiteten ersten Hilfssignal (H1') ein aufbereitetes erstes Sensorsignal (S1') und ein aufbereitetes erstes Referenzsignal (R1, Rx1, Ry1, Rz1) heraus zu filtern,
   - Mitteln, die dazu dienen aus dem aufbereiteten zweiten Hilfssignal (H2') ein aufbereitetes zweites Sensorsignal

(S2') und ein aufbereitetes zweites Referenzsignal (R2, Rx2, Ry2, Rz2) heraus zu filtern,

- Mittel (39) zur Bestimmung einer Phasen- oder Laufzeitdifferenz ($\Delta\varphi$(R1 R2'), $\Delta$t(R1', R2'); $\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) zwischen dem ersten aufbereiteten Referenzsignal (R1', Rx1, Ry1, Rz1) und dem zweiten aufbereiteten Referenzsignal (R2', Rx2, Ry2, Rz2), und

- Mittel (39) zur Korrektur der Phasen- oder Laufzeitdifferenz ($\Delta\varphi$(S1', S2'), $\Delta$t(S1', S2')) zwischen dem ersten und dem zweiten aufbereiteten Sensorsignal (S1', S2') anhand der Phasen- oder Laufzeitdifferenz ($\Delta\varphi$(R1', R2'), $\Delta$t(R1', R2') ; $\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) zwischen dem ersten und dem zweiten aufbereiteten Referenzsignal (R1', Rx1, Ry1, Rz1, R2', Rx2, Ry2, Rz2), und

- Mittel (39) zur Bestimmung des Massendurchflusses anhand der korrigierten aufbereiteten Sensorsignale.

2. Coriolis-Massendurchflussmesser nach Anspruch 1, bei dem die Mittel die dazu dienen dazu aus dem aufbereiteten ersten Hilfssignal (H1') ein aufbereitetes erstes Sensorsignal (S1') und ein aufbereitetes erstes Referenzsignal (R1, Rx1, Ry1, Rz1) heraus zu filtern, und die Mittel, die dazu dienen aus dem aufbereiteten zweiten Hilfssignal (H2') ein aufbereitetes zweites Sensorsignal (S2') und ein aufbereitetes zweites Referenzsignal (R2, Rx2, Ry2, Rz2) heraus zu filtern, zwei identische Sätze von jeweils mindestens zwei Filtern (FS1, FR1, FRx1, FRy1, Rz1; FS2, FR2, FRx2, FRy2, FRz2) umfassen, von denen ein erster (FS1, FR1, FRx1, Ry1, FRz1) dazu dient aus dem aufbereiteten ersten Hilfssignal (H1') das aufbereitete erste Sensorsignal (S1') und das aufbereitete erste Referenzsignal (R1, Rx1, Ry1, Rz1) heraus zu filtern, und von denen ein zweiter (FS2, FR2, FRx2, FRy2, FRz2) dazu dient aus dem aufbereiteten zweiten Hilfssignal (H2') das aufbereitete zweite Sensorsignal (S2') und das aufbereitete zweite Referenzsignal (R2, Rx2, Ry2, Rz2) heraus zu filtern.

3. Coriolis-Massendurchflussmesser nach Anspruch 1, bei dem die Eingangszweige (35, 37) einen Verstärker (A1, A2) und einen Analog-DigitalWandler (A/D1, A/D2) aufweisen und die Filter (FS1, FR1, FRx1, FRy1, FRz1, FS2, FR2, FRx2, FRy2, FRz2) digitale Filter sind.

4. Coriolis-Massendurchflussmesser nach Anspruch 1, bei dem der Referenzsignal-Generator (33, 33x, 33y, 33z) ein Spannungs-Generator oder ein digitaler Referenzsignal-Generator (34) ist, und jedes Referenzsignal (R, Rx, Ry, Rz) eine oszillierende Spannung mit einer vorgegebenen Frequenz ($f_R$, $f_{Rx}$, $f_{Ry}$, $f_{Rz}$) ist.

5. Coriolis-Massendurchflussmesser nach Anspruch 1, bei dem

- der erste Sensor (21) eine Spule (25) aufweist,
- der zweite Sensor (23) eine Spule (27) aufweist,
- der Referenzsignal-Generator (33, 34) mit einem ersten Anschluss (41) der Spule (25) des ersten Sensors (21) und einem ersten Anschluss (43) der Spule (27) des zweiten Sensors (25) verbunden ist, und
- ein zweiter Anschluss (45) der Spule (25) des ersten Sensors (21) mit einem Eingang des ersten Eingangszweigs (35) und ein zweiter Anschluss (47) der Spule (27) des zweiten Sensors (23) mit einem Eingang des zweiten Eingangszweigs (37) verbunden ist.

6. Verfahren zur Kompensation einer Phasen- oder Laufzeitdifferenz ($\Delta\varphi$(S1', S2'), $\Delta$t(S1', S2') von in getrennten Eingangszweigen (35, 37) aufbereiteten Sensorsignalen (S1, S2) eines Coriolis Massendurchflussmessers, bei dem

- ein Referenzsignal (R, Rx, Ry, Rz) parallel allen Sensorsignalen (S1, S2) überlagert wird,
- jedes durch Überlagerung eines Sensorsignals und des Referenzsignals gebildete Hilfssignale (H1, H2) einen eigenen Eingangszweig (35, 37) durchläuft,
- aus den in den Eingangszweigen (35, 37) aufbereiteten Hilfssignalen (H1', H2') jeweils ein dem Eingangszweig (35, 37) zugeordnetes aufbereitetes Sensorsignal (S1', S2') und ein zugeordnetes aufbereitetes Referenzsignal (R1', R2'; Rx1, Rx2; Ry1, Ry2; Rz1, Rz2) herausgefiltert wird,
- eine zwischen jeweils zwei aufbereiteten Referenzsignalen (R1', R2'; Rx1, Rx2; Ry1, Ry2; Rz1, Rz2) bestehende Phasen- oder Laufzeitdifferenz ($\Delta\varphi$(R1', R2'), $\Delta$t(R1', R2') ; $\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) bestimmt wird, und
- anhand dieser Phasen- oder Laufzeitdifferenz ($\Delta\varphi$(R1', R2'), $\Delta$t(R1', R2') ; $\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) eine Kompensation einer Phasen- oder Laufzeitdifferenz ($\Delta\varphi$(S1', S2'), $\Delta$t(S1', S2')) zwischen zwei Sensorsignalen (S1', S2') erfolgt, die in den beiden Eingangszweigen (35, 37) aufbereitet wurden, in denen auch die beiden Referenzsignale (R1', R2'; Rx1, Rx2; Ry1, Ry2; Rz1, Rz2) aufbereitet wurden.

7. Verfahren nach Anspruch 6, bei dem die zwischen jeweils zwei aufbereiteten Referenzsignalen (R1', R2'; Rx1, Rx2; Ry1, Ry2; Rz1, Rz2) bestehende Phasen- oder Laufzeitdifferenz ($\Delta\varphi$(R1', R2'), $\Delta$t(R1', R2'); $\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) über einen Zeitraum erfasst wird und zur Kompensation der Phasen- oder Laufzeitdifferenz ($\Delta\varphi$(S1', S2'), $\Delta$t(S1', S2')) zwischen zwei aktuell aufbereiteten Sensorsignalen (S1', S2') die über den Zeitraum erfassten Phasen- oder Laufzeitdifferenzen ($\Delta\varphi$(R1', R2'), $\Delta$t(R1', R2') ; $\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) der zugeordneten Referenzsignale (R1', R2', Rx1, Rx2; Ry1, Ry2; Rz1, Rz2) herangezogen werden.

8. Verfahren nach Anspruch 7, bei dem

   - zwei oder mehr Referenzsignale (Rx, Ry, Rz) mit unterschiedlicher Frequenz eingesetzt werden,
   - für jedes Referenzsignal (Rx, Ry, Rz) eine Phasen- oder Laufzeitdifferenz ($\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) der zugehörigen aufbereiteten Referenzsignale (Rx1, Rx2, Ry1, Ry2, Rz1, Rz2) bestimmt wird,
   - eine Frequenzabhängigkeit ($\Delta\varphi$(f), $\Delta$t(f)) der durch die Eingangszweige (35, 37) bedingten Phasen- oder Laufzeitdifferenzen $\Delta\varphi$(Rx1, Rx2), $\Delta$t(Rx1, Rx2); $\Delta\varphi$(Ry1, Ry2), $\Delta$t(Ry1, Ry2); $\Delta\varphi$(Rz1, Rz2), $\Delta$t(Rz1, Rz2)) zwischen den aufbereiteten Referenzsignalpaaren (Rx1, Rx2; Ry1, Ry2; Rz1, Rz2) bestimmt wird, und
   - bei der Kompensation die Frequenz ($f_s$) der Sensorsignale (S1, S2) und die Frequenzabhängigkeit der durch die Eingangszweige (35, 37) bedingten Phasen- oder Laufzeitdifferenzen ($\Delta\varphi$(f), $\Delta$t(f)) berücksichtigt werden.

9. Verfahren nach Anspruch 6, bei dem eine Amplitude ($A_R$) des Referenzsignals (R) mit den Amplituden ($A_{R1}$, $A_{R2}$) der zugehörigen aufbereiteten Referenzsignale (R1, R2) verglichen wird und hieraus für jeden Eingangszweig (35, 37) ein Verstärkungsfaktor (V1, V2) bestimmt wird, der bei einer weiteren Verarbeitung der aufbereiteten Sensorsignale (S1', S2') berücksichtigt wird.

10. Verfahren zur Verwendung eines Coriolis Massendurchflussmessers gemäß Anspruch 1, zur Bestimmung einer Laufzeit (T), die ein Sensorsignal (S1, S2) dieses Massendurchflussmessers, zum Durchlaufen eines Eingangszweigs (35, 37) dieses Massendurchflussmessers benötigt, bei dem der Referenz-Signalgenerator (34) einen Referenzsignalzug (RS) erzeugt, der den Eingangszweig (35, 37) durchläuft und die hierfür benötigte Laufzeit gemessen wird.

**Claims**

1. Coriolis mass flowmeter with

   - a measuring tube (3) which is excited to vibrate during measuring mode and through which a liquid flows, the mass flow of which is to be measured,
   - a first and a second sensor (21, 23) designed to measure a vibration of the measuring tube (3) that depends on the mass flow and designed to generate a first and a second sensor signal (S1, S2),
   - at least one reference signal generator (33, 33x, 33y, 33z, 34), which superimposes the same reference signal (R, Rx, Ry, Rz) on the first and the second sensor signal (S1, S2)
   - a first input branch (35) designed to prepare a first auxiliary signal (H1) formed from the first sensor signal (S1) and the superimposed reference signal (R, Rx, Ry, Rz),
   - a second input branch (37) designed to prepare a second auxiliary signal (H2) formed from the second sensor signal (S2) and the superimposed reference signal (R, Rx, Ry, Rz),
   - resources that are used to filter a prepared first sensor signal (S1') and a prepared first reference signal (R1, Rx1, Ry1, Rz1) out of the prepared first auxiliary signal (H1'),
   - resources that are used to filter a prepared second sensor signal (S2') and a prepared second reference signal (R2, Rx2, Ry2, Rz2) out of the prepared second auxiliary signal (H2'),
   - a resource (39) designed to determine a phase difference or runtime difference ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) between the first prepared reference signal (R1', Rx1, Ry1, Rz1) and the second prepared reference signal (R2', Rx2, Ry2, Rz2) and
   - a resource (39) designed to correct the phase difference or runtime difference ($\Delta\varphi$(S1', S2'), $\Delta$t(S1', S2') between the first and second prepared sensor signal (S1', S2') using the phase difference or runtime difference ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) between the first and the second prepared reference signal (R1', Rx1, Ry1, Rz1, R2', Rx2, Ry2, Rz2), and
   - a resource (39) designed to determine the mass flow using the corrected prepared sensor signals.

2. Coriolis mass flowmeter as claimed in Claim 1, wherein the resources that are used to filter a prepared first sensor signal (S1') and a prepared first reference signal (R1, Rx1, Ry1, Rz1) out of the prepared first auxiliary signal (H1') and the resources that are used to filter a prepared second sensor signal (S2') and a prepared second reference signal (R2, Rx2, Ry2, Rz2) out of the prepared second auxiliary signal (H2') comprises two identical sets of at least two filters (FS1, FR1, FRx1, FRy1, FRz1 ; FS2, FR2, FRx2, FRy2, FRz2), of which a first filter (FS1, FR1, FRx1, FRy1, FRz1) serves to filter the prepared first sensor signal (S1') and the prepared first reference signal (R1, Rx1, Ry1, Rz1) out of the prepared first auxiliary signal (H1'), and of which a second filter (FS2, FR2, FRx2, FRy2, FRz2) serves to filter the prepared second sensor signal (S2') and the prepared second reference signal (R2, Rx2, Ry2, Rz2) out of the prepared second auxiliary signal (H2').

3. Coriolis mass flowmeter as claimed in Claim 1, wherein the input branches (35, 37) have an amplifier (A1, A2) and an analog to digital converter (A/D1, A/D2) and wherein the filters (FS1, FR1, FRx1, FRy1, FRz1 ; FS2, FR2, FRx2, FRy2, FRz2) are digital filters.

4. Coriolis mass flowmeter as claimed in Claim 1, wherein the reference signal generator (33, 33x, 33y, 33z) is a voltage generator or a digital reference signal generator (34), and each reference signal (R, Rx, Ry, Rz) is an oscillating voltage with a predefined frequency ($f_R$, $f_{Rx}$, $f_{Ry}$, $f_{Rz}$).

5. Coriolis mass flowmeter as claimed in Claim 1, wherein

  - the first sensor (21) has a coil (25),
  - the second sensor (23) has a coil (27),
  - the reference signal generator (33, 34) is connected to a first connection (41) of the coil (25) of the first sensor (21) and to a first connection (43) of the coil (27) of the second sensor (23), and
  - a second connection (45) of the coil (25) of the first sensor (21) is connected to an input of the first input branch (35) and a second connection (47) of the coil (27) second sensor (23) is connected to an input of the second input branch (37).

6. Procedure designed to compensate for the phase difference or runtime difference ($\Delta\varphi$(S1', S2'), $\Delta$t(S1', S2') of sensor signals (S1, S2) of a Coriolis mass flowmeter prepared in separate input branches (35, 37), wherein

  - a reference signal (R, Rx, Ry, Rz) is superimposed in parallel on all sensor signals (S1, S2),
  - each auxiliary signal (H1, H2) formed by the superimposition of a sensor signal and a reference signal runs through an individual input branch (35, 37),
  - a prepared sensor signal (S1', S2') which is assigned to the input branch (35, 37) and an assigned prepared reference signal (R1', R2' ; Rx1, Rx2 ; Ry1, Ry2 ; Rz1, Rz2) is filtered out of the auxiliary signals (H1', H2') prepared in the input branches (35, 37),
  - a phase difference or runtime difference ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) existing between two prepared reference signals (R1', R2'; Rx1, Rx2 ; Ry1, Ry2 ; Rz1, Rz2) is determined, and
  - on the basis of this phase difference or runtime difference ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)), a phase difference or runtime difference ($\Delta\varphi$(S1', S2'), $\Delta$t(S1', S2')) is compensated for between two sensor signals (S1', S2') that were prepared in the two input branches (35, 37) in which the two reference signals (R1', R2' ; Rx1, Rx2 ; Ry1, Ry2 ; Rz1, Rz2) were also prepared.

7. Procedure as claimed in Claim 6, wherein the phase difference or runtime difference ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) existing between two prepared reference signals (R1', R2' ; Rx1, Rx2 ; Ry1, Ry2 ; Rz1, Rz2) is measured over a period and in order to compensate for the phase difference or runtime difference ($\Delta\varphi$(S1', S2'), $\Delta$t(S1', S2')) between two currently prepared sensor signals (S1', S2'), the phase differences or runtime differences ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) of the assigned reference signals (R1', R2' ; Rx1, Rx2 ; Ry1, Ry2 ; Rz1, Rz2) measured over the period are used.

8. Procedure as claimed in Claim 7, wherein

  - two or more reference signals (Rx, Ry, Rz) with different frequencies are used,
  - a phase difference or runtime difference ($\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1,

Rz2), Δt(Rz1, Rz2)) of the associated prepared reference signals (Rx1, Rx2, Ry1, Ry2, Rz1, Rz2) is determined for every reference signal (Rx, Ry, Rz),
- a frequency dependency (Δφ(f), Δt(f)) of the phase differences or runtime differences (Δφ(Rx1, Rx2), Δt(Rx1, Rx2) ; Δφ(Ry1, Ry2), Δt(Ry1, Ry2) ; Δφ(Rz1, Rz2), Δt(Rz1, Rz2)) between the prepared pairs of reference signals (Rx1, Rx2 ; Ry1, Ry2 ; Rz1, Rz2), which are conditioned by the input branches (35, 37), is determined, and
- the frequency (f$_s$) of the sensor signals (S1, S2) and the frequency dependency of the phase differences or runtime differences (Δφ(f), Δt(f)), conditioned by the input branches (35, 37), are taken into consideration during compensation.

9. Procedure as claimed in Claim 6, wherein
an amplitude (A$_R$) of the reference signal (R) is compared with the amplitudes (A$_{R1}$, A$_{R2}$) of the associated prepared reference signals (R1, R2) and on the basis of this an amplification factor (V1, V2) is determined for every input branch (35, 37), said factor being taken into consideration in additional processing of the prepared sensor signals (S1', S2').

10. Procedure for using a Coriolis mass flowmeter as claimed in Claim 1 to determine a runtime (T) which a sensor signal (S1, S2) of this mass flowmeter requires to run through an input branch (35, 37) of this mass flowmeter where the reference signal generator (34) generates a reference signal train (RS), which runs through the input branch (35, 37) and the runtime required for this is measured.

**Revendications**

1. Débitmètre massique Coriolis avec

- un tube de mesure (3) qui, en mode mesure, est excité en vibrations et est parcouru par un liquide, dont le débit massique doit être mesuré,
- un premier et un deuxième capteur (21, 23) destinés à la mesure d'une vibration du tube de mesure (3) dépendant du débit massique et destinés à la génération d'un premier et d'un deuxième signal de capteur (S1, S2),
- au moins un générateur de signaux de référence (33, 33x, 33y, 33z, 34), qui superpose au premier et au deuxième signal de capteur (S1, S2) le même signal de référence (R, Rx, Ry, Rz),
- une première branche d'entrée (35) destinée au traitement d'un premier signal auxiliaire (H1) formé du premier signal de capteur (S1) et du signal de référence (R, Rx, Ry, Rz) superposé,
- une deuxième branche d'entrée (37) destinée au traitement d'un deuxième signal auxiliaire (H2) formé du deuxième signal de capteur (S2) et du signal de référence (R, Rx, Ry, Rz) superposé,
- des moyens servant à extraire par filtrage, à partir du premier signal auxiliaire mis en forme (H1'), un premier signal de capteur mis en forme (S1') et un premier signal de référence mis en forme (R1, Rx1, Ry1, Rz1),
- des moyens servant à extraire par filtrage, à partir du deuxième signal auxiliaire mis en forme (H2'), un deuxième signal de capteur mis en forme (S2') et un deuxième signal de référence mis en forme (R2, Rx2, Ry2, Rz2),
- un moyen (39) destiné à la détermination d'une différence de phase ou de temps de propagation (Δφ(R1', R2'), Δt(R1', R2') ; Δφ(Rx1, Rx2), Δt(Rx1, Rx2) ; Δφ(Ry1, Ry2), Δt(Ry1, Ry2) ; Δφ(Rz1, Rz2), Δt(Rz1, Rz2)) entre le premier signal de référence mis en forme (R1', Rx1, Ry1, Rz1) et le deuxième signal de référence mis en forme (R2', Rx2, Ry2, Rz2) et
- un moyen (39) destiné à la correction de la différence de phase ou de temps de propagation (Δφ(S1', S2'), Δt(S1', S2') entre le premier et le deuxième signal de capteur mis en forme (S1', S2') au moyen de la différence de phase ou de temps de propagation (Δφ(R1', R2'), Δt(R1', R2') ; Δφ(Rx1, Rx2), Δt(Rx1, Rx2) ; Δφ(Ry1, Ry2), Δt(Ry1, Ry2) ; Δφ(Rz1, Rz2), Δt(Rz1, Rz2)) entre le premier et le deuxième signal de référence mis en forme (R1', Rx1, Ry1, Rz1, R2', Rx2, Ry2, Rz2), et
- un moyen (39) destiné à la détermination du débit massique au moyen des signaux de capteur mis en forme corrigés.

2. Débitmètre massique Coriolis selon la revendication 1, pour lequel les moyens, qui servent à extraire par filtrage, à partir du premier signal auxiliaire mis en forme (H1'), un premier signal de capteur mis en forme (S1') et un premier signal de référence mis en forme (R1, Rx1, Ry1, Rz1), et les moyens, qui servent à extraire par filtrage, à partir du deuxième signal auxiliaire mis en forme (H2'), un deuxième signal de capteur mis en forme (S2') et un deuxième signal de référence mis en forme (R2, Rx2, Ry2, Rz2), deux blocs identiques comprennent au moins deux filtres (FS1, FR1, FRx1, FRy1, FRz1 ; FS2, FR2, FRx2, FRy2, FRz2), parmi lesquels un premier filtre (FS1, FR1, FRx1, FRy1, FRz1) sert, à partir du premier signal auxiliaire mis en forme (H1'), à extraire par filtrage le premier signal de capteur mis en forme (S1') et le premier signal de référence mis en forme (R1, Rx1, Ry1, Rz1), et parmi lesquels un deuxième filtre (FS2, FR2, FRx2, FRy2, FRz2) sert, à partir du deuxième signal auxiliaire mis en forme (H2'), à extraire par filtrage le deuxième signal de capteur mis en forme (S2') et le deuxième signal de référence mis en forme (R2, Rx2, Ry2, Rz2).

**3.** Débitmètre massique Coriolis selon la revendication 1, pour lequel les branches d'entrée (35, 37) comportent un amplificateur (A1, A2) et un convertisseur analogique-numérique (A/D1, A/D2) et les filtres (FS1, FR1, FRx1, FRy1, FRz1 ; FS2, FR2, FRx2, FRy2, FRz2) sont des filtres numériques.

**4.** Débitmètre massique Coriolis selon la revendication 1, pour lequel le générateur de signaux de référence (33, 33x, 33y, 33z) est un générateur de tension ou un générateur de signaux de référence numérique (34), et chaque signal de référence (R, Rx, Ry, Rz) est une tension oscillante avec une fréquence prédéfinie ($f_R$, $f_{Rx}$, $f_{Ry}$, $f_{Rz}$).

**5.** Débitmètre massique Coriolis selon la revendication 1, pour lequel

- le premier capteur (21) comporte une bobine (25),
- le deuxième capteur (23) comporte une bobine (27),
- le générateur de signaux de référence (33, 34) est relié avec une première connexion (41) de la bobine (25) du premier capteur (21) et avec une première connexion (43) de la bobine (27) du deuxième capteur (23), et
- une deuxième connexion (45) de la bobine (25) du premier capteur (21) est reliée avec une entrée de la première branche d'entrée (35) et une deuxième connexion (47) de la bobine (27) du deuxième capteur (23) avec une entrée de la deuxième branche d'entrée (37).

**6.** Procédé destiné à la compensation d'une différence de phase ou de temps de propagation ($\Delta\varphi$(S1', S2'), $\Delta$t(S1', S2') de signaux de capteur (S1, S2) mis en forme dans des branches d'entrée (35, 37) séparées d'un débitmètre massique Coriolis, pour lequel

- un signal de référence (R, Rx, Ry, Rz) est superposé parallèlement à l'ensemble des signaux de capteur (S1, S2),
- chaque signal auxiliaire (H1, H2) formé par la superposition d'un signal de capteur et du signal de référence parcourt une branche d'entrée (35, 37) séparée,
- à partir desquels sont extraits par filtrage, dans les signaux auxiliaires mis en forme (H1', H2') dans les branches d'entrée (35, 37), respectivement un signal de capteur mis en forme (S1', S2') attribué à la branche d'entrée (35, 37) et un signal de référence mis en forme (R1', R2' ; Rx1, Rx2 ; Ry1, Ry2 ; Rz1, Rz2) correspondant,
- est déterminée une différence de phase ou de temps de propagation ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) existant entre respectivement deux signaux de référence mis en forme (R1', R2' ; Rx1, Rx2 ; Ry1, Ry2 ; Rz1, Rz2), et
- s'opère, au moyen de cette différence de phase ou de temps de propagation ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)), une compensation d'une différence de phase ou de temps de propagation ($\Delta\varphi$(S1', S2'), $\Delta$t(S1', S2')) entre deux signaux de capteur (S1', S2'), qui ont été mis en forme dans les deux branches d'entrée (35, 37), dans lesquelles ont également été mis en forme les deux signaux de référence (R1', R2' ; Rx1, Rx2 ; Ry1, Ry2 ; Rz1, Rz2).

**7.** Procédé selon la revendication 6, pour lequel la différence de phase ou de temps de propagation ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) existant entre respectivement deux signaux de référence mis en forme (R1', R2' ; Rx1, Rx2 ; Ry1, Ry2 ; Rz1, Rz2) est mesurée pendant une période définie, et pour lequel les différences de phase ou de temps de propagation ($\Delta\varphi$(R1', R2'), $\Delta$t(R1', R2') ; $\Delta\varphi$(Rx1, Rx2), $\Delta$t(Rx1, Rx2) ; $\Delta\varphi$(Ry1, Ry2), $\Delta$t(Ry1, Ry2) ; $\Delta\varphi$(Rz1, Rz2), $\Delta$t(Rz1, Rz2)) des signaux de référence (R1', R2' ; Rx1, Rx2 ; Ry1, Ry2 ; Rz1, Rz2) sont utilisés en vue de la compensation de la différence de phase ou de temps de propagation ($\Delta\varphi$(S1', S2'), $\Delta$t(S1', S2')) entre deux signaux de capteurs actuellement mis en forme (S1', S2').

**8.** Procédé selon la revendication 7, pour lequel

- deux signaux de référence (Rx, Ry, Rz) ou plus sont utilisés avec une fréquence différente,
- est déterminée, pour chaque signal de référence, une différence de phase ou de temps de propagation ($\Delta\varphi$(Rx1,

Rx2), Δt(Rx1, Rx2) ; Δφ(Ry1, Ry2), Δt(Ry1, Ry2) ; Δφ(Rz1, Rz2), Δt(Rz1, Rz2)) des signaux de référence mis en forme (Rx1, Rx2, Ry1, Ry2, Rz1, Rz2) correspondants,

- est déterminée une dépendance de fréquence (Δφ(f), Δt(f)) des différences de phase ou de temps de propagation (Δφ(Rx1, Rx2), Δt(Rx1, Rx2) ; Δφ(Ry1, Ry2), Δt(Ry1, Ry2) ; Δφ(Rz1, Rz2), Δt(Rz1, Rz2)) entre les paires de signaux de référence mis en forme (Rx1, Rx2 ; Ry1, Ry2 ; Rz1, Rz2), qui sont conditionnées par les branches d'entrée (35, 37), et

- sont prises en compte, lors de la compensation, la fréquence ($f_s$) des signaux de capteur (S1, S2) et la dépendance de fréquence des différences de phase et de temps de propagation (Δφ(f), Δt(f)), conditionnées par les branches d'entrée (35, 37).

9.  Procédé selon la revendication 6, pour lequel
    une amplitude ($A_R$) du signal de référence (R) est comparée avec les amplitudes ($A_{R1}$, $A_{R2}$) des signaux de référence mis en forme (R1, R2) correspondants et où un facteur d'amplification (V1, V2) en est déterminé pour chaque branche d'entrée (35, 37), lequel facteur est pris en compte lors d'un traitement ultérieur des signaux de référence mis en forme (S1', S2').

10. Procédé destiné à l'utilisation d'un débitmètre massique Coriolis selon la revendication 1, destiné à la détermination d'un temps de propagation (T) que nécessite un signal de capteur (S1, S2) de ce débitmètre massique pour parcourir une branche d'entrée (35, 37) de ce débitmètre massique, pour lequel le générateur de signaux de référence (34) génère un train de signaux de référence (RS), qui parcourt la branche d'entrée (35, 37), et pour lequel le temps de propagation nécessaire à cette fin est mesuré.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1298421 A
- JP 58151518 A
- WO 2006001805 A
- EP 97810559 A
- EP 9610942 A
- US 4793191 A
- US 4127028 A